# EUROPÄISCHE PATENTSCHRIFT

(11) **EP 3 257 374 B1**
(45) Veröffentlichungstag und Bekanntmachung des Hinweises auf die Patenterteilung: **08.04.2020**
(21) Anmeldenummer: 17401055.3
(22) Anmeldetag: 23.05.2017
(51) Int. Cl.: A01M 7/00

(54) **REGEL- UND/ODER STEUERSYSTEM, LANDWIRTSCHAFTLICHE MASCHINE UND VERFAHREN ZUR STEUERUNG UND/ODER REGELUNG EINER LANDWIRT- SCHAFTLICHEN MASCHINE**
REGULATION AND/OR CONTROL SYSTEM, AGRICULTURAL MACHINE AND A METHOD FOR CONTROLLING AND/OR REGULATING AN AGRICULTURAL MACHINE
SYSTÈME DE RÉGLAGE ET/OU DE COMMANDE, MACHINE AGRICOLE ET PROCÉDÉ DE COMMANDE ET/OU DE RÉGLAGE D'UNE MACHINE AGRICOLE

(30) Priorität: 06.06.2016 DE 102016110364
(43) Veröffentlichungstag der Anmeldung: 20.12.2017
(73) Patentinhaber: Amazonen-Werke H. Dreyer GmbH & Co. KG, 49205 Hasbergen (DE)
(72) Erfinder: Borchert, Anna-Gret, 49090 Osnabrück (DE)

(56) Entgegenhaltungen:
- EP-A1- 1 167 095
- WO-A1-2004/041446
- WO-A1-2009/074369
- DE-A1- 10 039 761
- DE-A1- 10 054 285
- DE-A1-102011 011 823
- US-A1- 2016 249 526
- US-A1- 2016 316 617

## Beschreibung

Die Erfindung betrifft ein Regel- und/oder Steuersystem für eine landwirtschaftliche Maschine gemäß dem Oberbegriff des Patentanspruchs 1. Ferner betrifft die Erfindung eine landwirtschaftliche Maschine gemäß Anspruch 12, sowie ein Verfahren zur Steuerung und/oder Regelung einer landwirtschaftlichen Maschine gemäß Anspruch 13. Des Weiteren betrifft die Erfindung ein weiteres Regel- und/oder Steuersystem gemäß Anspruch 14.

Zur effizienten Verteilung von Material, wie beispielsweise Düngemittel, Pflanzenschutzmittel oder Saatgut, weisen landwirtschaftliche Maschinen Feldspritzen mit einem Verteilergestänge auf, welches eine sehr große Arbeitsbreite von annähernd 40m umfassen kann. Derartige Feldspritzen können als selbstfahrende oder auch als an einer landwirtschaftlichen Maschine angehängte oder angebaute Spritzmaschinen ausgebildet sein. Um eine hohe Präzision bei der Ausbringung von Materialien erreichen zu können, sollte sich das Verteilergestänge möglichst wenig relativ zur landwirtschaftlichen Maschine bewegen.

Eine derartige Arbeitsbreite macht jedoch das Verteilergestänge schwingungsanfällig. Schwingungen werden typischerweise durch Beschleunigungen des Verteilergestänges ausgelöst. Diese Beschleunigungen entstehen beispielsweise durch das Anfahren oder Abbremsen der landwirtschaftlichen Maschine, das Überfahren von Unebenheiten der zu bearbeitenden Bodenstruktur, oder Kurvenfahrten. Je größer die Beschleunigung ist, umso größer ist generell die Biegung, oder anders gesagt die Auslenkung des Verteilergestänges. Das resultierende Verbiegen und die unkontrollierte, beschleunigte oder verzögerte Bewegung des Verteilergestänges versursacht eine unerwünschte, ungleichmäßige Verteilung des auszubringenden Materials. Dies kann beispielsweise bei der Ausbringung von Pflanzenschutzmitteln oder Pestiziden zu einer gesundheitsgefährdenden und umweltbelastenden Überdosierung führen. Zusätzlich führen auftretende Beschleunigungen, und die daraus resultierenden teilweise hohen Kräfte auf das Verteilergestänge, zu einem mechanischen Verschleiß.

Um die Kräfte, beziehungsweise die daraus resultierenden Schwingungsbewegungen, des Verteilergestänges aufzunehmen oder reduzieren zu können, sind passive und aktive Systeme zur Schwingungstilgung und/oder Schwingungsdämpfung des Verteilergestänges bekannt. Sowohl Dämpfung als auch Tilgung beschreibt die Reduzierung der Stärke bzw. idealerweise die Eliminierung der jeweiligen Schwingung. Die Unterscheidung erfolgt hierbei je nachdem welche Mittel zur Reduktion bzw. Eliminierung der Schwingung verwendet werden. Es versteht sich, dass im Rahmen der vorliegenden Anmeldung unter Dämpfung und Tilgung von Schwingungen jegliche Reduzierung der Bewegungsamplituden und der damit verbundenen wirksamen Kräfte verstanden wird. Die Begriffe Dämpfung und Tilgung sind daher in der vorliegenden Anmeldung als synonym anzusehen. Das Steuer- und Regelsystem lässt sich sowohl für eine aktive Dämpfung als auch für eine aktive Tilgung verwenden.

Passive Systeme bewirken eine Energiedissipation in Form von Dämpfung oder Tilgung und verkleinern damit auftretende Schwingungsamplituden. Mit aktiven Regelsystemen ist es möglich die Schwingungsamplituden noch einmal deutlich stärker zu verkleinern als mit passiven Systemen, da diese Systeme der Schwingung aktiv entgegen wirken so lange, bis ein bestimmter Sollwert erreicht ist. Ein derartiges aktives Regelsystem zur Schwingungstilgung eines Verteilergestänges ist in Fig. 1 beschrieben und beispielhaft aus der DE 10 2014 111 090 A1 bekannt.

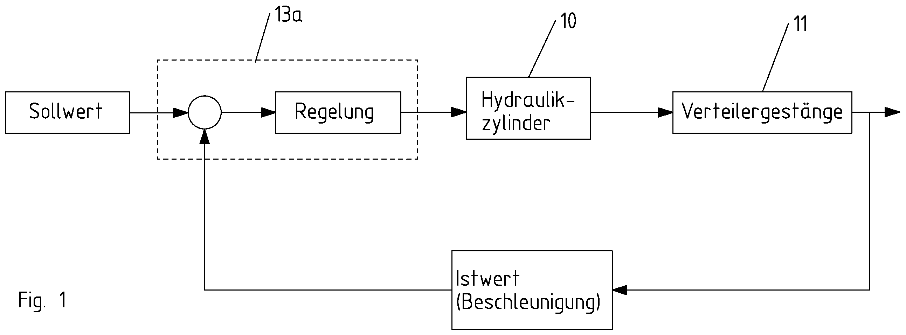

Fig. 1 zeigt ein schematisches Blockschaltbild eines Systems zur Steuerung und/oder Regelung von auftretenden Schwingungen eines Verteilergestänges 11 gemäß dem Stand der Technik. Hierbei werden von einem nicht dargestellten Sensor Daten des Verteilergestänges 11 erfasst. Beispielhaft wird die Beschleunigung des Verteilergestänges 11 durch den Sensor gemessen, und als Messsignal für den Istwert des Verteilergestänges 11 in einem Regelsystem 13a verwendet. Eine auftretende Beschleunigung kann beispielsweise durch eine Kurvenfahrt oder das Anfahren der landwirtschaftlichen Maschine erzeugt werden. Der Istwert beschreibt daher mit anderen Worten den aktuellen Zustand, insbesondere die aktuelle Beschleunigung, des Verteilergestänges 11.

Der Istwert wird im Regelsystem 13a mit einem Sollwert verglichen. Der Sollwert bezeichnet allgemein den angestrebten Wert der Beschleunigung des Verteilergestänges 11. Im Idealfall sollte der Istwert von dem Sollwert so gering wie möglich abweichen. Der Vergleich zwischen Istwert und Sollwert kann beispielsweise über eine Differenzbildung erfolgen. Der gewonnene Vergleichswert kann im Regelsystem 13a verwendet werden, um ein Stellsignal zu generieren, welches der Steuerung eines Hydraulikzylinders 10 dient. Der Hydraulikzylinder 10 reagiert ohne oder mit minimaler Zeitverzögerung auf von dem Regelsystem 13a ermittelte und übertragene Daten, und verhindert oder dämpft so das Schwingen des Verteilergestänges 11. Dabei wird der Hydraulikzylinder 10 entgegen der Bewegungsrichtung des Verteilergestänges 11 angesteuert, um das Verteilergestänge 11 wieder in eine ideale Position auszurichten. Generell gilt, dass der Hydraulikzylinder 10 umso dynamischer und schneller zur Dämpfung angesteuert werden muss, je höher die angeregte Frequenz des Verteilergestänges 11 ist.

Zusammenfassend wird eine auftretende beschleunigte oder verzögerte Bewegung des Verteilergestänges 11 erfasst und zur Regelung des Hydraulikzylinders 10 mittels des Regelsystems 13a übertragen. Das bekannte Regelsystem 13a verwendet somit die gemessene Beschleunigung als einziges Signal und Eingangsgröße für die Regelung des Hydraulikzylinders 10. Es wird daher der aktuell gemessenen Beschleunigung des Verteilergestänges 11 entgegengewirkt.

Problematisch ist, wenn über eine auftretende Beschleunigung, eine mögliche Eigenfrequenz des Verteilergestänges angeregt wird, wodurch das Verteilergestänge zu besonders starken Schwingungen angeregt werden kann.

Der Erfindung liegt daher die Aufgabe zugrunde, ein Regel- und/oder Steuersystem für eine landwirtschaftliche Maschine anzugeben, das eine verbesserte Dämpfung und/oder Tilgung von Schwingungen des Verteilergestänges ermöglicht. Der Erfindung liegt ferner die Aufgabe zu Grunde, eine landwirtschaftliche Maschine sowie ein Verfahren zur Steuerung und/oder Regelung einer landwirtschaftlichen Maschine anzugeben.

Diese Aufgabe wird erfindungsgemäß durch ein Regel- und/oder Steuersystem mit den Merkmalen des Anspruchs 1 gelöst. Des Weiteren wird die Aufgabe durch ein Regel- und/oder Steuersystem mit den Merkmalen des Anspruchs 14 gelöst.

Im Hinblick auf die landwirtschaftliche Maschine wird die Aufgabe durch den Gegenstand des Anspruchs 12 gelöst. Ferner wird die Aufgabe im Hinblick auf das Verfahren durch den Gegenstand des Anspruchs 13 gelöst.

Die Erfindung beruht auf dem Gedanken, ein Regel- und/oder Steuersystem für eine landwirtschaftliche Maschine mit einem Verteilergestänge zum Ausbringen von Material, wie Düngemittel, Pflanzenschutzmittel oder Saatgut und mit wenigstens einer Sensoreinrichtung zur Ermittlung der Schwingung des Verteilergestänges und einer Datenverarbeitungseinrichtung zur Verarbeitung von Messsignalen anzugeben, welche durch wenigstens ein Filter zur Filterung hinsichtlich mindestens einer Eigenfrequenz des Verteilergestänges gekennzeichnet ist.

Die Erfindung hat den Vorteil, dass durch das Filtern des Messsignals gezielt besonders relevante frequenzspezifische Amplituden erfasst und daher effizient geregelt und entgegengewirkt werden können. Das Filtern des Messsignals lässt sich generell für aktive Systeme zur Schwingungsdämpfung und/oder Schwingungstilgung anwenden. Die Analyse und damit die zusammenhängende Regelung der Eigenfrequenzen und den zugehörigen Amplituden, kann im Rahmen der vorliegenden Anmeldung sowohl im Frequenzraum, als auch im Zeitraum stattfinden.

Die Eigenfrequenz des Verteilergestänges als schwingfähiges System beschreibt die Frequenz, mit welcher das Verteilergestänge nach erfolgter Anregung als Eigenform schwingen kann. Diese Eigenformen, welche ihre Struktur abhängig vom schwingungsfähigen System erhalten, können auch als Schwingungsmoden mit zugehöriger Eigenfrequenz bezeichnet werden. Das Verteilergestänge besitzt allgemein mehrere Eigenfrequenzen, welche sich auch überlagern können. Wenn also das Verteilergestänge durch eine auftretende Beschleunigung mit einer Frequenz angeregt wird, welche mit einer Eigenfrequenz übereinstimmt, so reagiert das Verteilergestänge mit besonders großen Schwingungsamplituden. Das bedeutet, dass das Verteilergestänge zu einer Resonanz angeregt wird. Im Resonanzfall kann das Verteilergestänge um ein Vielfaches stärker schwingen als von der zugehörigen Beschleunigung zu erwarten ist. Die im Resonanzfall anwachsenden Ausschläge des Verteilergestänges entstehen typischerweise dadurch, dass das Verteilergestänge bei jeder Schwingung erneut Energie aufnehmen und speichern kann. Um zu verhindern, dass das Verteilergestänge durch zu große Ausschläge beschädigt wird, muss dem Verteilergestänge (kinetische) Energie entzogen werden.

In dem von der Sensoreinrichtung gemessenen Messsignal sind alle messbaren Frequenzen, daher beispielsweise auch mehrere Eigenfrequenzen, enthalten. Das Stellsignal für den Hydraulikzylinder enthält somit ebenfalls diese Frequenzen. Die Abstimmung der Regelung kann durch das erfindungsgemäße Filtern von mindestens einer Eigenfrequenz verbessert werden. Einem Auftreten einer Resonanz kann durch das erfindungsgemäße Filtern und eine zugehörige Regelung von eigenfrequenzspezifischen Amplituden daher entgegengewirkt werden.

Hierbei ist vor allem die Tilgung und/oder Dämpfung von horizontalen Schwingungen des Verteilergestänges relevant. Mit horizontalen Schwingungen werden hauptsächlich Schwingungen in Fahrtrichtung beschrieben. Diese können beispielsweise Gierbewegungen um eine Achse senkrecht auf das zu bearbeitende Feld umfassen. Horizontale Schwingungen bewirken generell eine Bewegung von einzelnen Düsen am Verteilergestänge mit unterschiedlicher Geschwindigkeit. Die Ausbringrate des Materials im Verteilergestänge ist aber zweckmäßigerweise konstant gehalten. Das bedeutet, dass auszubringendes Material von den Düsen mit höherer Geschwindigkeit eine wesentlich größere Fläche bedeckt. Mit anderen Worten führt die horizontale Schwingung zu einer inhomogenen Bedeckung des zu bearbeitenden Bodens. Durch das Filtern wenigstens einer Eigenfrequenz ist es möglich, auftretende horizontale Schwingungen des Verteilergestänges noch besser aktiv zu tilgen, da die Regelung für die wenigstens eine Eigenfrequenz und zugehörige Amplitude individuell abgestimmt werden kann.

Die Erfindung hat den weiteren Vorteil, dass das Filtern des Messsignals in Abhängigkeit von Eigenfrequenzen nicht nur für horizontale Schwingungen, sondern generell auf alle anderen Schwingungsformen des Verteilgestänges anwendbar ist. Beispielsweise können auch Schwingungen um eine in Fahrtrichtung verlaufende Drehachse oder vertikale Schwingungen erfasst und daher geregelt werden.

Bevorzugte Ausführungsformen der Erfindung sind in den Unteransprüchen angegeben.

Vorzugsweise ist das wenigstens eine Filter derart ausgebildet, dass das Schwingungsverhalten des Verteilergestänges auf der Basis einer experimentellen Analyse oder einer theoretischen Prognose erfasst ist. Die Eigenfrequenzen des Verteilergestänges sind daher bekannt und die Filter können speziell auf einen, den Eigenfrequenzen angepassten, Frequenzbereich eingestellt werden. Vorteilhafterweise kann die Anzahl der Filter an die Anzahl möglicher auftretender Eigenfrequenzen und zugehöriger Schwingungsmoden angepasst werden.

Bei einer bevorzugten Ausführungsform der Erfindung ist die Eigenfrequenz durch die Eigenfrequenz erster Ordnung gebildet. Die Eigenfrequenz erster Ordnung, oder mit anderen Worten die Schwingungsmode niedrigster Ordnung, liegt im Vergleich zu den Eigenfrequenzen höherer Ordnung in einem niedrigeren Frequenzbereich. Bei der Bearbeitung einer Bodenstruktur überwiegen vorzugsweise niederfrequente Anregungen des Verteilergestänges. Aus diesem Grund wird in der Regel die niedrigste Eigenfrequenz bevorzugt angeregt. Das Verteilergestänge kann daher bereits bei kleinen Beschleunigungen, welche eine Anregung im niederfrequenten Bereich bewirken können, zu einer Schwingung mit der Eigenfrequenz erster Ordnung angeregt werden. Durch das Filtern und zugehörige Regeln hinsichtlich der Eigenfrequenz erster Ordnung, kann daher eine Tilgung und/oder Dämpfung einer häufigen Ursache für das schädliche Aufschwingen des Verteilergestänges gewährleistet werden.

Vorzugsweise sind im Steuer- und Regelsystem mehrere Eigenfrequenzen unabhängig voneinander analysierbar, wobei die einzelnen Eigenfrequenzen nach ihrer Ordnung gewichtet sind. Die Gewichtung nach der Ordnung der Eigenfrequenzen ist zweckmäßigerweise derart beschrieben, dass die jeweilige auftretende Schwingung effizient getilgt und/oder gedämpft werden kann. Die Gewichtung richtet sich demnach idealerweise nach den spezifischen Eigenschaften des Verteilergestänges oder der Art der Anregung einer Schwingung. Im Speziellen richtet sich die Gewichtung nach der auftretenden Schwingungsamplitude am Verteilergestänge, und damit nach der notwendigen Kraft, um das Verteilergestänge durch eine Schwingungstilgung zurück in eine Ruhelage zu versetzen. Die Gewichtung kann beispielsweise auch ein negatives Vorzeichen aufweisen.

Bei einer weiteren Ausführungsform liegt das Verhältnis von einem jeweiligen Gewichtungsfaktor des Absolutbetrages zweier Eigenfrequenzen zugehörigen Amplituden unterschiedlicher Ordnung im Bereich von 0.05 bis 20. Mittels der Gewichtung ist auch eine Überlagerung von Eigenfrequenzen realitätsgetreu erfassbar und somit kann der Hydraulikzylinder effizient auf die zu tilgende Schwingung eingestellt werden.

In einer besonders bevorzugten Ausführungsform ist die wenigstens eine Sensoreinrichtung durch einen Beschleunigungssensor zur Ermittlung der Beschleunigung und/oder Verzögerung und/oder konstanten Geschwindigkeit des Verteilergestänges gebildet. Zweckmäßigerweise werden am Verteilergestänge mehrere Sensoreinrichtungen, insbesondere Beschleunigungssensoren, angebracht. Die Sensoreinrichtungen erfassen hierbei auftretende Beschleunigungen, beziehungsweise Geschwindigkeitsänderungen des Verteilergestänges, welche durch das Anfahren oder Abbremsen des landwirtschaftlichen Nutzfahrzeuges, Kurvenfahrten, oder Überfahrten von Unebenheiten in der Bodenstruktur auftreten können.

Die gemessene Beschleunigung kann im einfachsten Fall in Relation zu der angeregten Frequenz und Schwingungsamplitude des Verteilergestänges gebracht werden. Die Auslenkung des Verteilergestänges um die Ausgangslage kann zu jedem Zeitpunkt typischerweise durch eine sinusförmige Schwingung mit einer maximalen Amplitude und Frequenz beschrieben werden. Da die Beschleunigung die zweimalige zeitliche Ableitung der Auslenkung des Verteilergestänges darstellt, lässt sich die Schwingung des Verteilergestänges mittels einer bestimmten Frequenz und Amplitude beschreiben. Daher gewährleistet der Einsatz von Sensoren zur Messung der Beschleunigung eine hohe Regelgüte und daher eine insgesamt verbesserte Führung des Verteilergestänges..

Generell sind weitere Sensoreinrichtungen denkbar, welche die Neigungen oder vertikale Bewegungen des Verteilergestänges oder bestimmte Bereiche des Verteilergestänges zur Umgebung oder zueinander erfassen. Diese erfassten Bewegungen dienen zusätzlich der Regelung von einstellbaren Bewegungseinrichtungen zur aktiven Tilgung der auftretenden Schwingungen des Verteilergestänges. Hierzu können beispielsweise zusätzliche Abstands-, Neigungs- oder Winkelsensoren verwendet werden.

Vorzugsweise ist eine Reduzierung und/oder Beeinflussung der Schwingung des Verteilergestänges in Abhängigkeit von den Eigenfrequenzen zugehörigen Amplituden regelbar. Die Amplitude beschreibt allgemein die Auslenkung der Schwingung über den Ort des Verteilergestänges, im Vergleich zu seiner Ruhelage. Die Frequenz ist dagegen ein Maß für die Schnelligkeit der Schwingung. Durch die konstante Ausbringrate des Saatguts oder Pflanzenschutzmittels ist die Veränderung der Auslenkung des Verteilergestänges maßgebend für eine inhomogene Verteilung des Materials. Daher ist es von besonderem Vorteil, einer Auslenkung des Verteilergestänges entgegenzuwirken und, anders gesagt, die Schwingung in Abhängigkeit von der maximalen Amplitude zu regeln.

In einer bevorzugten Ausführungsform ist eine Regelung der Schwingung des Verteilergestänges an verschiedene Sollwerte, insbesondere den Amplituden, welche den verschiedenen Eigenfrequenzen zuordenbar sind, anpassbar. Die Schwingungsparameter, insbesondere die Eigenfrequenzen, sind maßgebend durch die spezifische Geometrie und Masse des Verteilergestänges bestimmt. Dadurch kann gezielt gegen ein schädliches Aufschwingen des Gestänges entgegengewirkt werden. Insbesondere können mehrere Eigenfrequenzen gefiltert werden und über die zugehörigen Amplituden an die jeweiligen Sollwerte angepasst werden. Dadurch lässt sich effizient eine Resonanz des Verteilergestänges verhindern.

In einer weiteren bevorzugten Ausführungsform erfolgt eine Reduzierung und/oder Beeinflussung der Schwingung des Verteilergestänges durch eine Bewegungseinrichtung. Die Bewegungseinrichtung stellt einen Aktor dar, wobei elektrische Signale, insbesondere jene der Datenverarbeitungseinrichtung, basierend auf den Messdaten der Sensoreinrichtung, in eine mechanische Bewegung umgewandelt werden. Anders gesagt, setzen elektrisch angesteuerte Ventile Signale einer Regelung mittels Aktoren in mechanische Arbeit um. Die Bewegungseinrichtung wird von dem Steuer- und/oder Regelsystem angesteuert und verändert die Lage des Verteilergestänges derart, dass dieses möglichst in der Ruhelage bleibt. Es sind verschiedene Arten von Bewegungseinrichtungen denkbar, wie beispielsweise Hydraulikzylinder, Pneumatikzylinder, Elektromotoren oder Hydraulikmotoren.

Vorzugsweise ist die Bewegungseinrichtung durch einen hydraulisch oder pneumatisch arbeitenden Zylinder, insbesondere Hydraulikzylinder, gebildet. Derartige Zylinder bilden kostengünstige und einfache Mittel zur Rückführung des Verteilergestänges in seine Ausgangslage. Die Verwendung hydraulischer oder pneumatischer Zylinder gestattet des Weiteren eine besonders wirksame Dämpfung der auftretenden Schwingungen, die beispielsweise auch von einem Stoß oder einer plötzlichen Bewegung des Verteilergestänges erzeugt werden können.

In einer weiteren Ausführungsform bildet die Bewegungseinrichtung mit der Sensoreinrichtung und der Datenverarbeitungseinrichtung eine Einheit. Dies impliziert eine direkte Verbindung zwischen der Sensoreinrichtung und der Datenverarbeitungseinrichtung, sowie der Bewegungseinrichtung. Daher kann das von der Sensoreinrichtung erfasste Messsignal effizient über die Datenverarbeitungseinrichtung im Regelsystem an einen Sollwert angepasst werden und schnellstmöglich an die Bewegungseinrichtung zur Schwingungstilgung über ein Stellsignal weitergegeben werden.

Im Rahmen der Erfindung wird weiterhin eine landwirtschaftliche Maschine zum Ausbringen von Material, wie Düngemittel, Pflanzenschutzmittel oder Saatgut, mit einem Verteilergestänge und einem Regel- und/oder Steuersystem nach einem der vorhergehenden Ausführungsformen beansprucht.

Weiterhin wird ein Verfahren zur Steuerung und/oder Regelung einer landwirtschaftlichen Maschine, bei dem Material, wie Düngemittel, Pflanzenschutzmittel oder Saatgut, aus einem Vorratsbehälter durch ein Verteilergestänge ausgebracht wird, beansprucht. Das Verteilergestänge erstreckt sich quer zur Fahrtrichtung und die landwirtschaftliche Maschine weist eine Bewegungseinrichtung und ein Regel- und/oder Steuersystem mit wenigstens einer Sensoreinrichtung zur Ermittlung der Schwingung des Verteilergestänges und eine Datenverarbeitungseinrichtung zur Verarbeitung von Messsignalen auf. Es ist vorgesehen, dass das Regel und/oder Steuersystem wenigstens ein Filter zur Filterung hinsichtlich mindestens einer Eigenfrequenz des Verteilergestänges aufweist und die Bewegungseinrichtung in Abhängigkeit von ermittelten Messsignalen angesteuert und/oder verstellt wird. Vorteilhafterweise lassen sich durch das Filtern von wenigstens einer Eigenfrequenz des Verteilergestänges gezielt schädliche Aufschwingungen von besonders relevanten frequenzspezifischen Amplituden erfassen und einer Resonanz des Verteilergestänges kann dadurch aktiv entgegengewirkt werden.

Im Rahmen der Erfindung wird weiterhin ein Regel- und/oder Steuersystem für eine landwirtschaftliche Maschine mit einem Verteilergestänge zum Ausbringen von Material, wie Düngemittel, Pflanzenschutzmittel oder Saatgut beansprucht, wobei für eine zeitdiskrete Zustandsregelung des Verteilergestänges als Modellsystem, wenigstens eine Zustandsgröße, insbesondere die Geschwindigkeit und/oder die Auslenkung des Verteilergestänges, durch einen Beobachter ermittelbar und nachfolgend schätzbar ist. Dabei kann der Zustand des Systems durch einen, das System vollständig beschreibenden Satz an Parametern dargestellt sein. Die Beschreibung des Verteilergestänges als ein Modellsystem in einem Zustandsraum hat den Vorteil, dass das Verhalten des Verteilergestänges in Abhängigkeit von verschiedenen Zuständen simuliert werden kann, und daher Steuerungen und/oder Regelungen für das Verteilergestänge als Modellsystem ausgelegt werden können. Beispielsweise kann ein zeitdiskretes Modellsystem, also ein Modellsystem zu verschiedenen Zeitpunkten, mit einem zeitdiskreten Regler effizient geregelt werden. Hierbei werden zu jedem Zeitpunkt die verschiedenen Systemzustände zurückgeführt. Diese Zustände sind zweckmäßigerweise durch eine Simulation bestimmt. Da Zustände des Systems in experimentellen Regelungen häufig nicht gemessen werden können, werden diese durch einen sogenannten Beobachter für zukünftige Zeitpunkte abgeschätzt. Basierend auf einem anfänglich bestimmten Messwert, kann also mittels des Beobachters effizient eine Prognose über zukünftige Zustände des Modellsystems getroffen werden.

Vorzugsweise ist der Beobachter als Kalmanfilter ausgebildet. Das Kalmanfilter erfüllt den Zweck, die Zustände der Schwingung des Verteilergestänges anhand von Messsignalen optimal zu schätzen. Das Gesamtsystem des Kalmanfilters umfasst daher das Verteilergestänge als physikalisches Schwingungssystem, die Sensoreinrichtung und die zugehörigen Messsignale als Messsystem, sowie das Systemrauschen und das Messrauschen als Störgrößen. Das bedeutet, dass sowohl die Messsignale der Sensoreinrichtung, als auch das Verteilergestänge mit einem Rauschen belegt sind. Das Messrauschen entsteht beispielsweise durch eine ungenaue oder fehlerhafte Sensoreinrichtung und das Systemrauschen lässt sich allgemein durch die Beeinflussung des physikalischen Schwingungssystems, also des Verteilergestänges, durch äußere Einwirkungen beschreiben.

Das Vorgehen mittels des Kalmanfilters beruht sowohl auf einer Vorhersage eines zukünftigen Zustands des Modellsystems, als auch auf einer Korrektur. Die Vorhersage des zukünftigen Zustandes, also der Schätzwert des zukünftigen Zustandes, ist anhand des bekannten Schwingungsverhaltens des Verteilergestänges bestimmt. Der Schätzwert wird anschließend mit dem Messsignal verglichen und anhand dessen Abweichung kann eine Korrektur berechnet werden. Man betrachtet demnach den vorhergesagten Zustand und den gemessenen Zustand und bestimmt aus diesen beiden Werten und weiteren bekannten Informationen über das Modellsystem einen optimalen zukünftigen Systemzustand.

Insgesamt lassen sich mittels Prognosen über zukünftige Systemzustände mögliche auftretende, schädliche Aufschwingungen des Verteilergestänges besser abschätzen und durch eine dementsprechende Regelung effizient vorbeugen.

Die Erfindung wird nachstehend mit weiteren Einzelheiten unter Bezug auf die beigefügten schematischen Zeichnungen näher erläutert. Darin zeigen
- Fig. 1: ein schematisches Blockschaltbild eines Systems zur Steuerung und/oder Regelung von auftretenden Schwingungen eines Verteilergestänges gemäß dem Stand der Technik;
- Fig. 2: ein schematisches Blockschaltbild eines erfindungsgemäßen Systems zur Steuerung und/oder Regelung von auftretenden Schwingungen eines Verteilergestänges gemäß einem ersten Ausführungsbeispiel.

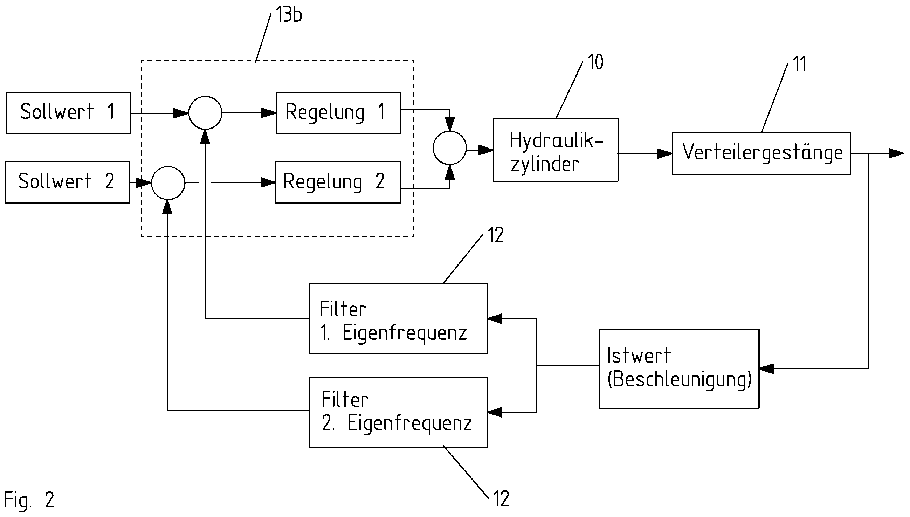

Fig. 2 zeigt ein schematisches Blockschaltbild eines erfindungsgemäßen Systems zur Steuerung und/oder Regelung von auftretenden Schwingungen eines Verteilergestänges 11 eines landwirtschaftlichen Fahrzeugs zur Ausbringung von Material gemäß einem ersten Ausführungsbeispiel. Eine nicht dargestellte Sensoreinrichtung kann eine Bewegung des Verteilergestänges 11 ermitteln und die Messsignale können von einer nicht dargestellten Datenverarbeitungseinrichtung verarbeitet werden. Das Regelsystem 13b umfasst hierbei die Datenverarbeitungseinrichtung, welche mit der Sensoreinrichtung gekoppelt ist.

Beispielhaft wird von der Sensoreinrichtung die Beschleunigung des Verteilergestänges 11 gemessen, und als Istwert im Regelsystem 13b verwendet. Eine auftretende Beschleunigung kann beispielsweise durch eine Kurvenfahrt oder das Anfahren der landwirtschaftlichen Maschine erzeugt werden.

Das Messsignal der Sensoreinrichtung ist derart filterbar, dass beispielhaft zwei Eigenfrequenzen des Verteilergestänges 11 erfassbar sind. Da die Eigenfrequenzen des Verteilergestänges 11 materialspezifisch und daher bekannt sind, können die Frequenzbereiche der Eigenfrequenzen mit Frequenzfiltern 12 gefiltert werden. Diese Frequenzfilter 12 können beispielsweise durch Digitalfilter oder Bandpassfilter gebildet sein. Mit anderen Worten filtert das Frequenzfilter 12 die jeweilige Eigenfrequenz des Verteilergestänges 11 aus der gemessenen Beschleunigung in einem vorher festgelegten Bereich heraus. Das bedeutet, dass bei jeder gemessenen Beschleunigung des Verteilergestänges 11 eindeutig ersichtlich ist, welche Eigenfrequenzen des Verteilergestänges 11 durch die Beschleunigung angeregt werden. Die den gefilterten Eigenfrequenzen zugehörigen Amplituden werden anschließend mit einemjeweiligen Sollwert verglichen und typischerweise mit einem Gewichtungsfaktor gewichtet. Der Gewichtungsfaktor richtet sich hierzu zweckmäßigerweise nach der Schwingungsamplitude, die am Verteilergestänge auftritt und der notwendigen Kraft, um das Verteilergestänge wieder in seine Ruhelage zu versetzen. Innerhalb des Regelsystems 13b können die gewichteten Eigenfrequenzen addiert oder subtrahiert, oder anders gesagt, überlagert werden. Im Regelsystem 13b werden demnach die den beiden gefilterten Eigenfrequenzen zugehörigen Amplituden des Verteilergestänges gewichtet, wodurch sich der Hydraulikzylinder 10 über die Ausgabe eines Stellsignals, welches die Abweichung zwischen Sollwert und Istwert berücksichtigt, präziser auf einen Tilgungsbereich der auftretenden Schwingung des Verteilergestänges 11 einstellen lässt. Generell gilt hier, je stärker die Amplitude der angeregten Eigenfrequenzen sind, umso dynamischer muss die Schwingungstilgung des Hydraulikzylinders 10 erfolgen. Der Hydraulikzylinder 10 kann beispielsweise über nicht dargestellte Kabel mit dem Regelsystem 13b verbunden sein. Das Regelsystem 13b kann beispielsweise über elektrische Leitungen mit der landwirtschaftlichen Maschine verbunden sein, und wird dadurch mit Strom versorgt.

Die vom Regelsystem 13b an den Hydraulikzylinder 10 übermittelten Einstellungen der Schwingungstilgung und/oder Dämpfung können beispielweise eine vollständige Blockade bis hin zu völligem Freigang des Verteilergestänges oder möglichen Zwischenstufen, welche eine bestimmte Bewegung des Hydraulikzylinders 10 entgegen der auftretenden Schwingung, umfassen. Über den Hydraulikzylinder 10 kann also das Verteilergestänge 11 schwächer oder stärker in seiner Bewegung und Auslenkung gedämpft werden.

Insgesamt lässt sich über das erfindungsgemäße Filtern und die beispielhafte Gewichtung der Eigenfrequenzen des Verteilergestänges 11, der Hydraulikzylinder 10 effizient an eine zu tilgende Schwingung anpassen, damit eine Resonanz und damit ein schädliches Aufschwingen des Verteilergestänges 11 aktiv gedämpft werden kann. Es ist generell denkbar, dass mehrere Eigenfrequenzen, also auch solche von höherer Ordnung, gefiltert und deren Amplituden berücksichtigt werden.

### Bezugszeichenliste

- 10: Hydraulikzylinder
- 11: Verteilergestänge
- 12: Frequenzfilter
- 13a,b: Regelsystem

## Patentansprüche

1. Regel- und/oder Steuersystem für eine landwirtschaftliche Maschine mit einem Verteilergestänge (11) zum Ausbringen von Material, wie Düngemittel, Pflanzenschutzmittel oder Saatgut, mit wenigstens einer Sensoreinrichtung zur Ermittlung der Schwingung des Verteilergestänges (11) und einer Datenverarbeitungseinrichtung zur Verarbeitung von Messsignalen,
**gekennzeichnet durch**
wenigstens ein Filter zur Filterung hinsichtlich mindestens einer Eigenfrequenz des Verteilergestänges (11).

2. System nach Anspruch 1,
**dadurch gekennzeichnet, dass**
das wenigstens eine Filter derart ausgebildet ist, dass das Schwingungsverhalten des Verteilergestänges (11) auf der Basis einer experimentellen Analyse oder einer theoretischen Prognose erfasst ist.

3. System nach einem der vorhergehenden Ansprüche,
**dadurch gekennzeichnet, dass**
die Eigenfrequenz durch die Eigenfrequenz erster Ordnung gebildet ist.

4. System nach einem der vorhergehenden Ansprüche,
**dadurch gekennzeichnet, dass**
mehrere Eigenfrequenzen unabhängig voneinander analysierbar sind, wobei die einzelnen Eigenfrequenzen nach ihrer Ordnung gewichtet sind.

5. System nach einem der vorhergehenden Ansprüche,
**dadurch gekennzeichnet, dass**
das Verhältnis von einem jeweiligen Gewichtungsfaktor des Absolutbetrages zweier Eigenfrequenzen zugehörigen Amplituden unterschiedlicher Ordnung im Bereich von 0.05 bis 20 liegt.

6. System nach einem der vorhergehenden Ansprüche,
**dadurch gekennzeichnet, dass**
die wenigstens eine Sensoreinrichtung durch einen Beschleunigungssensor zur Ermittlung der Beschleunigung und/oder Verzögerung und/oder konstanten Geschwindigkeit des Verteilergestänges (11) gebildet ist.

7. System nach einem der vorhergehenden Ansprüche,
**dadurch gekennzeichnet, dass**
eine Reduzierung und/oder Beeinflussung der Schwingung des Verteilergestänges (11) in Abhängigkeit von den Eigenfrequenzen zugehörigen Amplituden regelbar ist.

8. System nach einem der vorhergehenden Ansprüche,
**dadurch gekennzeichnet, dass**
eine Regelung der Schwingung des Verteilergestänges (11) an verschiedene Sollwerte, insbesondere den Amplituden, welche den verschiedenen Eigenfrequenzen zuordenbar sind, anpassbar ist.

9. System nach einem der vorhergehenden Ansprüche,
**dadurch gekennzeichnet, dass**
eine Reduzierung und/oder Beeinflussung der Schwingung des Verteilergestänges (11) durch eine Bewegungseinrichtung erfolgt.

10. System nach Anspruch 9,
**dadurch gekennzeichnet, dass**
die Bewegungseinrichtung durch einen hydraulisch oder pneumatisch arbeitenden Zylinder, insbesondere Hydraulikzylinder (10), gebildet ist.

11. System nach Anspruch 9 oder 10,
**dadurch gekennzeichnet, dass**
die Bewegungseinrichtung mit der Sensoreinrichtung und der Datenverarbeitungseinrichtung eine Einheit bildet.

12. Landwirtschaftliche Maschine zum Ausbringen von Material, wie Düngemittel, Pflanzenschutzmittel oder Saatgut, mit einem Verteilergestänge (11) und einem Regel- und/oder Steuersystem nach einem der vorhergehenden Ansprüche.

13. Verfahren zur Steuerung und/oder Regelung einer landwirtschaftlichen Maschine, bei dem Material, wie Düngemittel, Pflanzenschutzmittel oder Saatgut, aus einem Vorratsbehälter durch ein Verteilergestänge (11) ausgebracht wird, wobei sich das Verteilergestänge (11) quer zur Fahrtrichtung erstreckt und die landwirtschaftliche Maschine eine Bewegungseinrichtung und ein Regel- und/oder Steuersystem mit wenigstens einer Sensoreinrichtung zur Ermittlung der Schwingung des Verteilergestänges (11) und einer Datenverarbeitungseinrichtung zur Verarbeitung von Messsignalen aufweist, wobei das Regel- und/oder Steuersystem wenigstens ein Filter zur Filterung hinsichtlich mindestens einer Eigenfrequenz des Verteilergestänges (11) aufweist und die Bewegungseinrichtung in Abhängigkeit von ermittelten Messsignalen angesteuert und/oder verstellt wird.

14. Regel- und/oder Steuersystem nach zumindest einem der Ansprüche 1 bis 11,
**dadurch gekennzeichnet, dass**
für eine zeitdiskrete Zustandsregelung des Verteilergestänges (11) als Modellsystem, wenigstens eine Zustandsgröße, insbesondere die Geschwindigkeit und/oder die Auslenkung des Verteilergestänges (11), durch einen Beobachter ermittelbar und nachfolgend schätzbar ist.

15. System nach Anspruch 14,
**dadurch gekennzeichnet, dass**
der Beobachter als Kalmanfilter ausgebildet ist.

## Claims

1. Regulation and/or control system for an agricultural machine having a distributor linkage (11) for applying material such as fertiliser, plant protection agent or seed, having at least one sensor device for determining the vibration of the distributor linkage (11) and a data-processing device for processing the measured signals,
**characterized by**
at least one filter for filtering with respect to at least one natural frequency of the distributor linkage (11) .

2. System according to Claim 1,
**characterized in that**
the at least one filter is formed in such a way that the vibratory behaviour of the distributor linkage (11) is detected on the basis of an experimental analysis or a theoretical forecast.

3. System according to one of the preceding claims,
**characterized in that**
the natural frequency is formed by the natural frequency of the first order.

4. System according to one of the preceding claims,
**characterized in that**
a plurality of natural frequencies can be analysed independently of one another, the individual natural frequencies being weighted according to their order.

5. System according to one of the preceding claims,
**characterized in that**
the ratio of a respective weighting factor of the absolute magnitude of amplitudes of different order associated with two natural frequencies lies in the range from 0.05 to 20.

6. System according to one of the preceding claims,
**characterized in that**
the at least one sensor device is formed by an acceleration sensor for determining the acceleration and/or deceleration and/or constant speed of the distributor linkage (11).

7. System according to one of the preceding claims,
**characterized in that**
a reduction in and/or influence on the vibration of the distributor linkage (11) can be regulated as a function of amplitudes associated with the natural frequencies.

8. System according to one of the preceding claims,
**characterized in that**
regulation of the vibration of the distributor linkage (11) can be adapted to different set points, in particular the amplitudes which can be assigned to the various natural frequencies.

9. System according to one of the preceding claims,
**characterized in that**
the vibration of the distributor linkage (11) can be reduced and/or influenced by a movement device.

10. System according to Claim 9,
**characterized in that**
the movement device is formed by a hydraulically or pneumatically operating cylinder, in particular a hydraulic cylinder (10).

11. System according to Claim 9 or 10,
**characterized in that**
the movement device forms a unit with the sensor device and the data-processing device.

12. Agricultural machine for applying material such as fertiliser, plant protection agent or seed, having a distributor linkage (11) and a regulation and/or control system according to one of the preceding claims.

13. Method for controlling and/or regulating an agricultural machine in which material such as fertiliser, plant protection agent or seed from a storage container is applied by a distributor linkage (11), the distributor linkage (11) extending transversely with respect to the direction of travel, and the agricultural machine having a movement device and a regulation and/or control system with at least one sensor device for determining the vibration of the distributor linkage (11) and a data-processing device for processing measured signals, wherein the regulation and/or control system has at least one filter for filtering with respect to at least one natural frequency of the distributor linkage (11), and the movement device is activated and/or adjusted as a function of determined measured signals.

14. Regulation and/or control system according to at least one of Claims 1 to 11,
**characterized in that**
for time-discrete state regulation of the distributor linkage (11) as a model system, at least one state variable, in particular the speed and/or the deflection of the distributor linkage (11), can be determined by an observer and subsequently estimated.

15. System according to Claim 14,
**characterized in that**
the observer is designed as a Kalman filter.

## Revendications

1. Système de régulation et/ou de commande pour une machine agricole comprenant une rampe de distribution (11) destinée à épandre du matériel, tel que de l'engrais, des produits phytosanitaires ou des semences, comprenant au moins un dispositif capteur destiné à déterminer les vibrations de la rampe de distribution (11) et un dispositif de traitement de données destiné à traiter des signaux de mesure,
**caractérisé par**
au moins un filtre servant au filtrage du point de vue d'au moins une fréquence propre de la rampe de distribution (11).

2. Système selon la revendication 1, **caractérisé en ce que** l'au moins un filtre est configuré de telle sorte que le comportement vibratoire de la rampe de distribution (11) est détecté en se basant sur une analyse expérimentale ou une prévision théorique.

3. Système selon l'une des revendications précédentes, **caractérisé en ce que** la fréquence propre est formée par la fréquence propre du premier ordre.

4. Système selon l'une des revendications précédentes, **caractérisé en ce que** plusieurs fréquences propres peuvent être analysées indépendamment les unes des autres, les fréquences propres individuelles étant pondérées en fonction de leur ordre.

5. Système selon l'une des revendications précédentes, **caractérisé en ce que** le rapport entre un facteur de pondération respectif de la valeur absolue des amplitudes d'ordres différents associées à deux fréquences propres est compris dans la plage de 0,05 à 20.

6. Système selon l'une des revendications précédentes, **caractérisé en ce qu'**au moins un dispositif capteur est formé par un capteur d'accélération destiné à déterminer l'accélération et/ou le ralentissement et/ou la vitesse constante de la rampe de distribution (11).

7. Système selon l'une des revendications précédentes, **caractérisé en ce qu'**une réduction et/ou une influence de la vibration de la rampe de distribution (11) peut être régulée en fonction des amplitudes associées aux fréquences propres.

8. Système selon l'une des revendications précédentes, **caractérisé en ce qu'**une régulation de la vibration de la rampe de distribution (11) peut être adaptée à différentes valeurs de consigne, notamment aux amplitudes qui peuvent être associées aux différentes fréquences propres.

9. Système selon l'une des revendications précédentes, **caractérisé en ce qu'**une réduction et/ou une influence de la vibration de la rampe de distribution (11) est réalisée par un dispositif de mise en mouvement.

10. Système selon l'une des revendications précédentes, **caractérisé en ce que** le dispositif de mise en mouvement est formé par un vérin à fonctionnement hydraulique ou pneumatique, notamment un vérin hydraulique (10).

11. Système selon la revendication 9 ou 10, **caractérisé en ce que** le dispositif de mise en mouvement forme une unité avec le dispositif capteur et le dispositif de traitement de données.

12. Machine agricole destinée à épandre du matériel, tel que de l'engrais, des produits phytosanitaires ou des semences, comprenant une rampe de distribution (11) et un système de régulation et/ou de commande selon l'une des revendications précédentes.

13. Procédé de régulation et/ou de commande d'une machine agricole, avec lequel du matériel, tel que de l'engrais, des produits phytosanitaires ou des semences, est épandu depuis un réservoir par une rampe de distribution (11), la rampe de distribution (11) s'étendant transversalement par rapport à la direction de déplacement et la machine agricole et la machine agricole possédant un dispositif de mise en mouvement ainsi qu'un système de régulation et/ou de commande comprenant au moins un dispositif capteur destiné à déterminer les vibrations de la rampe de distribution (11) et un dispositif de traitement de données destiné à traiter des signaux de mesure, le système de régulation et/ou de commande possédant au moins un filtre servant au filtrage du point de vue d'au moins une fréquence propre de la rampe de distribution (11) et le dispositif de mise en mouvement étant commandé et/ou positionné en fonction des signaux de mesure déterminés.

14. Système de régulation et/ou de commande selon l'une des revendications 1 à 11, **caractérisé en ce que** pour une régulation d'état à des instants discrets de la rampe de distribution (11) en tant que modèle de système, au moins une grandeur d'état, notamment une vitesse et/ou la déviation de la rampe de distribution (11), peut être déterminée par un observateur et ensuite estimée.

15. Système selon la revendication 14, **caractérisé en ce que** l'observateur est réalisé sous la forme d'un filtre de Kalman.
